# EUROPÄISCHE PATENTSCHRIFT

(11) **EP 3 997 316 B1**
(45) Veröffentlichungstag und Bekanntmachung des Hinweises auf die Patenterteilung: **13.12.2023**
(21) Anmeldenummer: 20736988.5
(22) Anmeldetag: 03.07.2020
(51) Int. Cl.: F01N 3/035

(54) **VERFAHREN UND VORRICHTUNG ZUR VERSORGUNG EINER WASSERSTOFF-BRENNKRAFTMASCHINE EINES KRAFTFAHRZEUGS MIT WASSERSTOFF**
METHOD AND DEVICE FOR SUPPLYING A HYDROGEN INTERNAL COMBUSTION ENGINE OF A MOTOR VEHICLE WITH HYDROGEN
PROCÉDÉ ET DISPOSITIF POUR ALIMENTER EN HYDROGÈNE UN MOTEUR À COMBUSTION INTERNE À HYDROGÈNE D'UN VÉHICULE À MOTEUR

(30) Priorität: 13.07.2019 DE 102019004905
(43) Veröffentlichungstag der Anmeldung: 18.05.2022
(73) Patentinhaber: MAN Truck & Bus SE, 80995 München (DE)
(72) Erfinder: MALISCHEWSKI, Thomas, 80995 München (DE); BARCIELA DÍAZ-BLANCO, Bruno, 80995 München (DE)
(74) Vertreter: v. Bezold & Partner Patentanwälte - PartG mbB
(86) Internationale Anmeldenummer: PCT/EP2020/068770
(87) Internationale Veröffentlichungsnummer: WO 2021/008897

(56) Entgegenhaltungen:
- WO-A1-2020/035307
- WO-A2-2015/061215
- DE-A1-102005 025 615
- DE-A1-102015 225 394
- US-A1- 2016 214 858

## Beschreibung

Die Erfindung betrifft ein Verfahren und eine Vorrichtung zur Versorgung einer Wasserstoff-Brennkraftmaschine eines Kraftfahrzeugs, vorzugsweise eines Nutzfahrzeugs, mit Wasserstoff.

Für heutige Wasserstoffanwendungen im mobilen Bereich kommen insbesondere zwei Systeme in Betracht: Erstens eine Druckspeicherung bei bis zu 700 bar und zweitens eine flüssige Wasserstoffspeicherung bei -253°C. Für beide Systeme sind sehr hohe Tankkosten zu erwarten, um eine für Nutzfahrzeuge akzeptable Reichweite bereitzustellen.

Für stationäre Anwendungen und im Konzeptstadium für mobile Anwendungen gibt es auch die Möglichkeit der chemischen Einlagerung des Wasserstoff mittels flüssiger organischer Wasserstoffträger (engl. LOHC - liquid organic hydrogen carrier(s)). Bei dieser Methode wird der Wasserstoff chemisch an ein zuvor unbeladenes Trägermaterial bzw. Trägermittel (LOHC-) gebunden. Um den Wasserstoff wieder aus dem LOHC+ zu lösen, ist die Zufuhr von Wärmeenergie notwendig.

DE 10 2008 034 221 A1 offenbart eine Kraftstoffversorgungseinrichtung für ein mit Wasserstoff betreibbares Kraftfahrzeug. Eine Kraftstoffversorgungseinrichtung zur Versorgung einer Brennkraftmaschine eines Kraftfahrzeugs besteht mindestens aus einem ersten Speichertank für ein mit Wasserstoff angereichertes Trägermittel, insbesondere flüssiges LOHC, und aus einem zweiten Speichertank für ein dehydriertes Trägermittel. Ein druck- und temperaturfestes Reaktorgefäß ist eingebunden, das mindestens eine Wärmetauscher- und eine Separatorfunktion zur Bereitstellung von Wasserstoff für die Brennkraftmaschine ausführen kann. Eine Abgasleitung der Brennkraftmaschine ist durch den Reaktorbehälter hindurch und nach dem Verlassen des Reaktorbehälters über einen Wärmetauscher zu einer Abgasaustrittsöffnung geführt.

Die DE 10 2010 038 490 A1 offenbart eine Kraftstoffversorgungseinrichtung für ein Wasserstoff-Kraftfahrzeug. Ein Gegenstromwärmetauscher ist mittels seiner eigenen Anschlussleitungen an ein Reaktorgefäß angeschlossen. Der Wärmetauscher ist mittels einer Wärmeträgermedium, insbesondere Kühlwasser oder Abgase einer Brennkraftmaschine, führenden Leitung mit der Brennkraftmaschine verbunden.

Die US 2016/214858 A1 offenbart ein Verfahren und System für ein Verfahren zur Freisetzung von Wasserstoff aus einem wasserstoffhaltigen organischen Träger. Das Verfahren umfasst die Bereitstellung eines Reaktorsystems, das eine erste Reaktionszone und eine zweite Reaktionszone umfasst. Die erste Reaktionszone weist eine erste Reaktionsbedingung und die zweite Reaktionszone eine zweite Reaktionsbedingung auf, wobei die erste Reaktionsbedingung und die zweite Reaktionsbedingung unterschiedlich sind.

Der Erfindung liegt die Aufgabe zu Grunde, eine alternative und/oder verbesserte Technik zum Versorgen einer Wasserstoff-Brennkraftmaschine eines Kraftfahrzeugs mit Wasserstoff zu schaffen.

Die Aufgabe wird gelöst durch die Merkmale der unabhängigen Ansprüche. Vorteilhafte Weiterbildungen sind in den abhängigen Ansprüchen und der Beschreibung angegeben.

Die Erfindung schafft eine Vorrichtung zur Versorgung einer Wasserstoff-Brennkraftmaschine (z. B. Wasserstoff-Hubkolben-Brennkraftmaschine) eines Kraftfahrzeugs, vorzugsweise eines Nutzfahrzeugs (z. B. Lastkraftwagen oder Omnibus), mit Wasserstoff. Die Vorrichtung weist einen Speichertank für ein Fluid, das ein mit Wasserstoff angereichertes (z. B. flüssiges) Trägermittel, vorzugsweise LOHC, aufweist, auf. Die Vorrichtung weist einen ersten Wärmeübertrager auf, der zum Empfangen des Fluids stromabwärts von dem Speichertank angeordnet ist und zum Erwärmen des Fluids durch Wärmeübertragung von einem Kühlmittel, vorzugsweise Kühlwasser, der Wasserstoff-Brennkraftmaschine ausgebildet ist. Die Vorrichtung weist einen zweiten Wärmeübertrager auf, der zum Empfangen des erwärmten Fluids stromabwärts von dem ersten Wärmeübertrager angeordnet ist und zum weiteren Erwärmen des Fluids durch Wärmeübertragung von einem Abgasstrom der Wasserstoff-Brennkraftmaschine ausgebildet ist. Es ist möglich, dass die Vorrichtung einen Katalysator aufweist, der zum Empfangen des weiter erwärmten Fluids stromabwärts von dem zweiten Wärmeübertrager angeordnet und zum Herauslösen des Wasserstoffs aus dem Fluid ausgebildet ist (zum Beispiel bei einer Temperatur in einem Bereich zwischen 300°C und 350°C).

Die Vorrichtung schafft ein energetisch hocheffizientes System, bei der die thermische Energie im Abgas und die thermische Energie im Kühlmittel sinnvoll genutzt werden. Die Reihenschaltung des ersten und zweiten Wärmeübertragers ermöglicht ein stufenweises Erhöhen der Temperatur des Fluids im Hinblick auf das von dem Kühlmittel und dem Abgas jeweils bereitgestellte Temperaturniveau. Beide Wärmeübertrager zusammen ermöglichen eine kontinuierliche und sichere Versorgung der Wasserstoff-Brennkraftmaschine mit Wasserstoff. Es wurde herausgefunden, dass die zum Herauslösen des Wasserstoffs aus dem Trägermittel benötigte Energie in etwa 33% des Energiegehalts des Wasserstoffs entspricht. Diese benötigte thermische Energie kann besonders sicher erst durch die Abwärmenutzung der Wasserstoff-Brennkraftmaschine in Form des Kühlmittels und in Form des Abgases bereitgestellt werden. Gegenüber dem Stand der Technik kann daher eine Versorgungssicherheit mit Wasserstoff erhöht werden, wobei hierzu ausschließlich ohnehin vorhandene (Ab-)Wärmequellen der Wasserstoff-Brennkraftmaschine ausgenutzt werden.

Zweckmäßig kann der erste Wärmeübertrager in einem Kühlmittelkreislauf der Wasserstoff-Brennkraftmaschine angeordnet sein, zum Beispiel in einem Ablauf des Kühlmittelkreislaufs.

Bevorzugt kann der zweite Wärmeübertrager in einem Abgassystem der Wasserstoff-Brennkraftmaschine angeordnet sein, vorzugsweise stromabwärts einer Turbine des Abgassystems.

In einem Ausführungsbeispiel kann die Vorrichtung ferner mindestens eine Bypassleitung, vorzugsweise eine Abgasbypassleitung und/oder eine Fluidbypassleitung für das Fluid, aufweisen, die vorzugsweise zum Umgehen des zweiten Wärmeübertragers angeordnet ist. Zweckmäßig kann die Abgasbypassleitung von einer Hauptabgasleitung stromaufwärts des zweiten Wärmeübertragers abzweigen und/oder mit einer Hauptabgasleitung stromabwärts des zweiten Wärmeübertragers verbunden sein. Beispielsweise kann die Fluidbypassleitung von einer Hauptfluidleitung für das Fluid stromaufwärts des zweiten Wärmeübertragers abzweigen und/oder mit einer Hauptfluidleitung stromabwärts des zweiten Wärmeübertragers verbunden sein. Die Bypassleitung kann ermöglichen, dass eine Temperaturregelung bezüglich der Temperaturerhöhung des Fluids in dem zweiten Wärmeübertrager stattfinden kann.

In einer Weiterbildung weist die Vorrichtung mindestens ein Ventil auf, das zweckmäßig zum Anpassen des Abgasstroms und/oder des Fluidstroms, zu dem zweiten Wärmeübertrager und/oder zu der Bypassleitung angeordnet ist. Bevorzugt kann das Ventil derart gesteuert sein, dass eine Überhitzung des erwärmten Fluids im zweiten Wärmeübertrager oberhalb von einer vorbestimmten Temperaturgrenze (zum Beispiel größer oder gleich 360°C) verhindert wird. Das Ventil kann beispielsweise dazu genutzt werden, einen Abgasmassenstrom der Wasserstoff-Brennkraftmaschine (oder einen Fluidmassenstrom des Fluids von dem ersten Wärmeübertrager) in einen ersten Teilstrom zu dem zweiten Wärmeübertrager und einen zweiten Teilstrom zu der Bypassleitung aufzuteilen. Durch die Mengensteuerung des Abgasstroms durch den zweiten Wärmeübertrager kann eine Temperatur des Fluids am Ausgang des zweiten Wärmeübertragers beeinflusst werden und so bspw. eine ungewünschte Überhitzung des Fluids verhindert werden.

In einem weiteren Ausführungsbeispiel ist das Ventil an einem Abzweig der Bypassleitung (z. B. von einer Hauptabgasleitung oder einer Hauptfluidleitung) oder in der Bypassleitung angeordnet. Alternativ kann das Ventil beispielsweise auch stromabwärts von einem Abzweig der Bypassleitung und/oder stromaufwärts von dem zweiten Wärmeübertrager angeordnet sein.

In einem weiteren Ausführungsbeispiel ist das Ventil, vorzugsweise mittelbar oder unmittelbar, temperaturgesteuert bezüglich einer Temperatur des Fluids an einem Eingang und/oder an einem Ausgang des zweiten Wärmeübertragers. Damit kann beispielsweise eine zu dem zweiten Wärmeübertrager zugeführte Abgasstrommenge derart eingestellt werden, dass sich eine gewünschte Temperatur des Fluids am Ausgang des zweiten Wärmeübertragers einstellt.

In einer Ausführungsform ist der erste Wärmeübertrager dazu ausgebildet ist, das Fluid durch Wärmeübertragung von dem Kühlmittel auf ein Temperaturniveau größer oder gleich 90°C, vorzugsweise zwischen 90°C und 110°C, zu erwärmen. Damit kann das Fluid beispielsweise annähernd auf das Temperaturniveau des Kühlmittels der Wasserstoff-Brennkraftmaschine gebracht werden. Das Kühlmittel kann hierbei abkühlen. Die sonst ungenutzte Abwärme des Kühlmittels kann sinnvoll für die notwendige Erwärmung des Fluids genutzt werden, um letztendlich den Wasserstoff aus dem erwärmten Fluid herauslösen zu können.

In einer weiteren Ausführungsform ist der zweite Wärmeübertrager dazu ausgebildet, das (z. B. auf eine Temperatur zwischen 90°C und 110°C) erwärmte Fluid durch Wärmeübertragung von dem Abgasstrom auf ein Temperaturniveau größer oder gleich 300°C, vorzugsweise zwischen 300°C und 360°C, und/oder auf ein zum Herauslösen des Wasserstoffs aus dem Fluid erforderliches Temperaturniveau zu erwärmen. Damit kann die Abgasenthalpie in gro-ßem Maße ebenfalls sinnvoll für die notwendige Erwärmung des Fluids genutzt werden.

In einer Ausführungsvariante ist der erste Wärmeübertrager als ein Platten-Wärmeübertrager ausgeführt und/oder der erste Wärmeübertrager ist aus einem Aluminiumwerkstoff hergestellt oder besteht daraus. Damit kann besonders viel thermische Energie von dem Kühlmittel auf das Fluid übertragen werden.

In einer weiteren Ausführungsvariante weist die Vorrichtung einen Puffertank auf, der vorzugsweise zum Speichern des herausgelösten Wasserstoffs stromabwärts des Katalysators angeordnet ist. Zweckmäßig kann die mindestens eine Verbrennungskammer der Wasserstoff-Brennkraftmaschine stromabwärts des Puffertanks angeordnet sein. Die mindestens eine Verbrennungskammer kann mit Wasserstoff aus dem Puffertank versorgt werden. Der Puffertank kann auch dazu dienen, genügend gasförmigen Wasserstoff für einen Kaltstart der Wasserstoff-Brennkraftmaschine vorzuhalten. Der Puffertank kann ebenfalls dazu dienen, kurzzeitig einen erhöhten Wasserstoffverbrauch der Wasserstoff-Brennkraftmaschine unter Spitzenlastbedingungen zu ermöglichen.

In einem Ausführungsbeispiel ist der Puffertank als ein Drucktank ausgeführt, der den herausgelösten Wasserstoff gasförmig unter Druck speichert, vorzugsweise mit einem Druck kleiner oder gleich 50 bar. Damit können die Kosten für den Puffertank und der Energieaufwand für einen Verdichter zum Fördern des gasförmigen Wasserstoffs in den Puffertank vergleichsweise gering sein.

In einem weiteren Ausführungsbeispiel weist der Puffertank ein Volumen kleiner oder gleich 200 I, vorzugsweise in einem Bereich zwischen 100 I und 200 I, auf. Damit kann der Puffertank ein genügend großes Volumen aufweisen, um einen kontinuierlichen Betrieb der Wasserstoff-Brennkraftmaschine mit Wasserstoff zu ermöglichen und zudem als Puffer unter Kaltstartbedingungen oder unter Spitzenlastbedingungen zu dienen.

In einer Weiterbildung ist der Puffertank füllstandsüberwacht und/oder drucküberwacht, vorzugsweise zum Einhalten einer Speicherung einer vorbestimmten Mindestmenge von Wasserstoff, der vorzugsweise für einen Kaltstart der Wasserstoff-Brennkraftmaschine und/oder für eine Spitzenlast (Maximallast) der Wasserstoff-Brennkraftmaschine vorgehalten wird.

In einer Ausführungsform weist die Vorrichtung ferner eine Heizeinrichtung auf, vorzugsweise eine elektrische Heizeinrichtung oder einen Brenner, zum Erwärmen des Fluids, der vorzugsweise im oder stromaufwärts des Katalysators angeordnet ist. Mittels der Heizeinrichtung kann das Fluid beispielsweise unter Kaltstartbedingungen auf das im Katalysator erforderliche Temperaturniveau zum Herauslösen des Wasserstoffs aufgewärmt werden. Es ist auch möglich, dass die Heizeinrichtung beispielsweise im Schwachlastbetrieb der Wasserstoff-Brennkraftmaschine verwendet wird, um das Fluid auf das im Katalysator erforderliche Temperaturniveau zum Herauslösen des Wasserstoffs zu erwärmen.

In einer weiteren Ausführungsform weist die Vorrichtung einen weiteren Wärmeübertrager, vorzugsweise stromabwärts des ersten Wärmeübertragers und/oder stromaufwärts des zweiten Wärmeübertragers, auf. Vorzugsweise ist der weitere Wärmeübertrager zum Erwärmen des Fluids durch Wärmeübertragung von einem Ladeluftstrom der Wasserstoff-Brennkraftmaschine ausgebildet. Zweckmäßig kann der weitere Wärmeübertrager in einem Ladeluftsystem der Wasserstoff-Brennkraftmaschine stromabwärts eines Verdichters angeordnet sein. Damit kann auch die beim Abkühlen der Ladeluft entstehende Abwärme genutzt werden, um das Fluid zu erwärmen. Beispielsweise kann der weitere Wärmeübertrager stromabwärts des ersten Wärmeübertragers und/oder stromaufwärts des zweiten Wärmeübertragers angeordnet sein.

Die Erfindung betrifft auch ein Fahrzeug, vorzugsweise ein Kraftfahrzeug, bevorzugt ein Nutzfahrzeug (z. B. Lastkraftwagen oder Omnibus), aufweisend eine Wasserstoff-Brennkraftmaschine (z. B. Wasserstoff-Hubkolben-Brennkraftmaschine) und die Vorrichtung zur Wasserstoffversorgung wie hierin offenbart. Das Fahrzeug ermöglicht die Erzielung der gleichen Vorteile, wie hierin bereits zuvor für die Vorrichtung zur Wasserstoffversorgung beschrieben ist.

Es ist auch möglich, die Vorrichtung wie hierin offenbart für Personenkraftwagen, Großmotoren, geländegängige Fahrzeuge, stationäre Motoren, Marinemotoren auf Wasserfahrzeugen usw. zu verwenden.

Die Erfindung betrifft auch ein Verfahren zum Versorgen einer Wasserstoff-Brennkraftmaschine eines Kraftfahrzeugs, vorzugsweise eines Nutzfahrzeugs, mit Wasserstoff, vorzugsweise unter Verwendung der Vorrichtung zur Wasserstoffversorgung wie hierin offenbart. Das Verfahren weist ein Speichern eines Fluids, das ein mit Wasserstoff angereichertes (z. B. flüssiges) Trägermittel, vorzugsweise LOHC, aufweist, auf. Das Verfahren weist ein Erwärmen des Fluids durch Wärmeübertragung von einem Kühlmittel, vorzugsweise Kühlwasser, der Wasserstoff-Brennkraftmaschine auf. Das Verfahren weist ein weiteres Erwärmen des erwärmten Fluids durch Wärmeübertragung von einem Abgasstrom der Wasserstoff-Brennkraftmaschine auf. Das Verfahren weist ein Herauslösen des Wasserstoffs aus dem weiter erwärmten Fluid auf. Letztlich kann das Verfahren zusätzlich beispielsweise ein Zuführen des herausgelösten Wasserstoffs zu der Wasserstoff-Brennkraftmaschine aufweisen. Das Verfahren ermöglicht die Erzielung der gleichen Vorteile, wie hierin bereits zuvor für die Vorrichtung zur Wasserstoffversorgung beschrieben ist.

In einem Ausführungsbeispiel erwärmt das Erwärmen des Fluids durch Wärmeübertragung von dem Kühlmittel das Fluid auf ein Temperaturniveau größer oder gleich 90°C, vorzugsweise zwischen 90°C und 110°C.

In einem weiteren Ausführungsbeispiel erwärmt das weitere Erwärmen des Fluids durch Wärmeübertragung von dem Abgasstrom das Fluid auf ein Temperaturniveau größer oder gleich 300°C erwärmt, vorzugsweise zwischen 300°C und 360°C, und/oder auf ein zum Herauslösen des Wasserstoffs aus dem Fluid erforderliches Temperaturniveau.

In einer Ausführungsform weist das Verfahren ein Anpassen einer Temperatur des Fluids, vorzugsweise ein Verhindern eines Überhitzens des Fluids oberhalb von einer vorbestimmten Temperaturgrenze, durch Anpassen einer für die Wärmeübertragung zur Verfügung stehenden Abgasstrommenge auf, vorzugsweise mittels einer gesteuerten, vorzugsweise ventilgesteuerten, Abgasbypassleitung. Alternativ oder zusätzlich weist das Verfahren ein Anpassen einer Temperatur des Fluids, vorzugsweise ein Verhindern eines Überhitzens des Fluids oberhalb von einer vorbestimmten Temperaturgrenze, durch Anpassen einer für die Wärmeübertragung zur Verfügung stehenden Fluidstrommenge auf, vorzugsweise mittels einer gesteuerten, vorzugsweise ventilgesteuerten, Fluidbypassleitung.

In einer weiteren Ausführungsform weist das Verfahren ein Vorhalten eines Puffervolumens von aus dem Fluid herausgelösten Wasserstoff stromaufwärts der Wasserstoff-Brennkraftmaschine für einen Kaltstart der Wasserstoff-Brennkraftmaschine und/oder für eine Spitzenlast der Brennkraftmaschine auf.

Beispielsweise kann das Verfahren ferner ein teilweises oder vollständiges Aufbrauchen des Puffervolumens für den Kaltstart und/oder für die Spitzenlast aufweisen.

Zweckmäßig kann das Verfahren ferner ein (Wieder-)Befüllen des Puffervolumens vorzugsweise unter Normalbetriebsbedingungen der Wasserstoff-Brennkraftmaschine auf eine für den Kaltstart und/oder für die Spitzenlast erforderliche Mindestmenge an Wasserstoff aufweisen.

Wie hierin verwendet, beziehen sich die Ausdrücke "stromabwärts" oder "stromaufwärts" auf eine jeweilige Strömungsrichtung eines vom Kontext abhängigen Fluids, z. B. das Fluid, das Abgas, das Kühlmittel, die Ladeluft usw.

Die zuvor beschriebenen bevorzugten Ausführungsformen und Merkmale der Erfindung sind beliebig miteinander kombinierbar. Weitere Einzelheiten und Vorteile der Erfindung werden im Folgenden unter Bezug auf die beigefügten Zeichnungen beschrieben. Es zeigen:
- Figur 1: ein Schema mit beispielhaften Energieströmen, die bei einer Wasserstoff-Brennkraftmaschine auftreten können; und
- Figur 2: eine Schemadarstellung einer Brennkraftmaschine mit einer Vorrichtung zur Versorgung mit Wasserstoff.

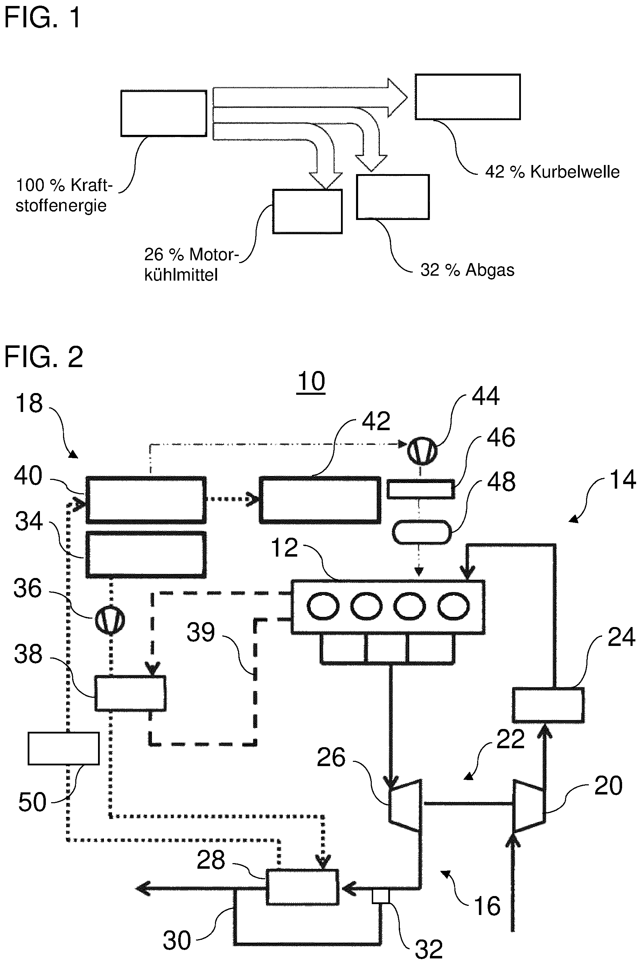

Die Figur 1 zeigt in welche Energieanteile sich die Kraftstoffenergie von Wasserstoff bei einer mit dem Wasserstoff betriebenen Brennkraftmaschine aufteilt. Die vom Wasserstoff bereitgestellte Kraftstoffenergie wird zu 42 % in mechanische Energie umgewandelt, die an der Kurbelwelle abgenommen werden kann. Zusätzlich wird die vom Wasserstoff bereitgestellte Kraftstoffenergie zu rund 32 % in Wärmeenergie im Abgas und zu rund 26 % in Wärmeenergie eines Motorkühlmittels, insbesondere Kühlwasser, umgewandelt. Hieraus ergibt sich, dass ca. 60 % der vom Wasserstoff bereitgestellten Kraftstoffenergie nicht als mechanisch nutzbare Energie vorliegen. Eine Nutzung der (Ab-)Wärmeenergie bietet daher Potenzial hinsichtlich einer Verbesserung des Wirkungsgrad einer Wasserstoff-Brennkraftmaschine.

Die Figur 2 zeigt eine Brennkraftmaschine 10. Besonders bevorzugt ist die Brennkraftmaschine 10 in einem Kraftfahrzeug, vorzugsweise einem Nutzfahrzeug, zum Antreiben des Kraftfahrzeugs umfasst. Es ist allerdings auch möglich, die Brennkraftmaschine beispielsweise stationär oder in einem Wasserfahrzeug zu betreiben. Die Brennkraftmaschine 10 ist eine Wasserstoff-Brennkraftmaschine, die ausschließlich oder zumindest teilweise durch Verbrennung von Wasserstoff angetrieben wird.

Die Brennkraftmaschine 10 weist einen Motorblock 12, ein Einlassluftsystem 14, ein Abgassystem 16 und eine Vorrichtung 18 zur Wasserstoffversorgung auf.

Der Motorblock 12 kann einen oder mehrere Zylinder aufweisen. Die Zylinder umfassen jeweils eine Verbrennungskammer, in der Wasserstoff zusammen mit Luft verbrennbar ist. Die Verbrennung treibt für jeden Zylinder bspw. über einen bewegbaren Kolben, vorzugsweise Hubkolben, eine drehbare Kurbelwelle an.

Das Einlassluftsystem 14 führt Verbrennungsluft zu den Verbrennungskammern des Motorblocks 12 zu. Die Verbrennungsluft kann beispielsweise in einem Verdichter 20 eines Turboladers 22 verdichtet werden. Die verdichtete Luft kann in einem Wärmeübertrager 24 vor dem Zuführen zu den Verbrennungskammern abgekühlt werden. Der Wärmeübertrager 24 ist bezüglich des Einlassluftstroms stromabwärts des Verdichters 20 und stromaufwärts des Motorblocks 12 angeordnet. Das Einlassluftsystem 14 kann weitere Komponenten aufweisen, die in Figur 2 nicht näher dargestellt sind, wie zum Beispiel einen Filter, einen weiteren Verdichter, einen weiteren Wärmeübertrager usw.

Das Abgassystem 16 führt die Abgase aus den Verbrennungskammern des Motorblocks 12 ab. Das Abgassystem 16 kann eine Abgasturbine 26 des Turboladers 22 aufweisen. Das Abgassystem 16 weist einen Wärmeübertrager 28 auf. Der Wärmeübertrager 28 ist bezüglich des Abgasstroms stromabwärts der Abgasturbine 26 angeordnet.

Stromaufwärts des Wärmeübertragers 28 zweigt eine Abgasbypassleitung 30 von der (Haupt-)Abgasleitung ab. Die Abgasbypassleitung 30 umgeht den Wärmeübertrager 28. Die Abgasbypassleitung 30 ist mit einer (Haupt-)Abgasleitung stromabwärts des Wärmeübertragers 28 verbunden. Am Abzweig der Abgasbypassleitung 30 ist ein Ventil 32 angeordnet. Das Ventil 32 kann eine Abgasstrommenge durch den Wärmeübertrager 28 beeinflussen. Es versteht sich, dass das Ventil 32 zur Erfüllung seiner Aufgabe auch anders angeordnet sein kann, z. B. in der Abgasbypassleitung 30 oder stromaufwärts des Wärmeübertragers 28.

Das Ventil 32 kann jegliche Bauform und jegliche Betätigungsart aufweisen. Das Ventil 32 kann beispielsweise als ein Sicherheitsventil ausgeführt sein, das bei übermäßigen Druck und/oder übermäßiger Temperatur des Abgases öffnet und zumindest einen Teil des Abgases durch die Abgasbypassleitung 30 leitet. Es ist auch möglich, dass das Ventil 32 ein einstellbares Ventil ist, mit dem eine Abgasströmungsmenge durch den Wärmeübertrager 28 und/oder die Abgasbypassleitung 30 einstellbar ist, z. B. angesteuert durch eine Steuereinheit der Brennkraftmaschine 10.

Es ist möglich, dass das Abgassystem 16 weitere Komponenten aufweist, die in Figur 2 nicht gesondert dargestellt sind, wie beispielsweise eine Abgasnachbehandlungsvorrichtung, zum Beispiel aufweisend eine SCR-Vorrichtung.

Die Vorrichtung 18 weist einen Speichertank 34, eine Pumpe 36, einen Wärmeübertrager 38, den Wärmeübertrager 28 und einen Katalysator bzw. ein Reaktorgefäß 40 auf.

In dem Speichertank 34 kann ein mit Wasserstoff beladenes, vorzugsweise flüssiges Trägermittel (nachfolgend kurz als das Fluid bezeichnet), insbesondere LOHC, gespeichert sein. Der Speichertank 34 kann einen Einfüllstutzen aufweisen, um das Fluid einzufüllen und nachzufüllen.

Die Pumpe 36 ist stromabwärts des Speichertanks 34 angeordnet. Die Pumpe 36 kann das Fluid aus dem Speichertank 34 absaugen. Das Fluid wird durch den Wärmeübertrager 38 und den Wärmeübertrager 28 zu dem Katalysator 40 gepumpt.

Der Wärmeübertrager 38 kann bezüglich des Fluidstroms stromabwärts des Speichertanks 34 und/oder der Pumpe 36 angeordnet sein. Der Wärmeübertrager 38 kann stromaufwärts des Wärmeübertragers 28 und des Katalysators 40 angeordnet sein. Der Wärmeübertrager 38 ist zweckmäßig als ein Flüssig-Flüssig-Wärmeübertrager ausgeführt. Der Wärmeübertrager 38 ermöglicht eine Wärmeübertragung von einem Kühlmittel der Brennkraftmaschine 10 auf das Fluid. Der Wärmeübertrager 38 ist somit zweckmäßig in einem Kühlmittelkreislauf 39, vorzugsweise einem Kühlwasserkreislauf, der Brennkraftmaschine 10 zum Kühlen des Motorblocks 12 eingebunden. Beispielsweise kann der Wärmeübertrager 38 in einem Ablauf des Kühlmittelkreislaufes 39 integriert sein.

Zum Begünstigen eines besonders großen Wärmeübertrags von dem Kühlmittel auf das Fluid kann der Wärmeübertrager 38 zweckmäßig als ein Platten-Wärmeübertrager ausgeführt sein und/oder aus einem Aluminiumwerkstoff hergestellt sein. Andere Bautypen und/oder Werkstoffe sind ebenfalls möglich.

Im Wärmeübertrager 38 kann das Fluid zum Beispiel von Umgebungstemperatur auf ein Temperaturniveau zwischen 90°C und 110°C erwärmt werden, je nach Ausführung des Wärmeübertragers 38 und des Kühlmittelkreislaufes 39. In diesem Schritt können bspw. bis zu 30 % der für das Herauslösen des Wasserstoffs benötigten thermischen Energie bereitgestellt werden.

Der Wärmeübertrager 28 ist bezüglich des Fluidstroms stromabwärts des Wärmeübertragers 38 und stromaufwärts des Katalysators 40 angeordnet. Die Wärmeübertrager 38 und 28 sind damit in Reihe geschaltet, wobei das Fluid zweckmäßig zunächst den Wärmeübertrager 38 und danach den Wärmeübertrager 28 durchströmt.

Der Wärmeübertrager 28 ermöglicht eine Wärmeübertragung von dem Abgas der Brennkraftmaschine 10 auf das Fluid. Der Wärmeübertrager 28 ist somit zweckmäßig als ein Gas-Flüssig-Wärmeübertrager ausgeführt. Beispielsweise kann der Wärmeübertrager 28 als ein Platten-Wärmeübertrager, ein Rohrbündel Wärmeübertrager oder ein Rohr-in-Rohr-Wärmeübertrager ausgeführt sein.

Im Wärmeübertrager 28 kann das bereits im Wärmeübertrager 38 vorerwärmte Fluid auf ein Temperaturniveau zwischen 300°C und 360°C erwärmt werden. Um bei zu heißen Abgasen ein Überhitzen des Fluids in dem Wärmeübertrager 28 auf z. B. eine Temperatur oberhalb von 360°C zu vermeiden, kann das Ventil 32 entsprechend betrieben werden, um zumindest ein Teil des Abgasstroms durch die Abgasbypassleitung 30 zu leiten, wenn erforderlich. Demzufolge kann das Ventil 32 beispielsweise mittelbar oder unmittelbar temperaturgesteuert bezüglich einer Temperatur des Fluids am Eingang und/oder am Ausgang des Wärmeübertragers 28 sein. Es ist bspw. auch möglich, zusätzlich oder alternativ zu der Abgasbypassleitung 30 und dem Ventil 32 eine Fluidbypassleitung für das Fluid, die den Wärmeübertrager 28 fluidseitig umgeht, und ein entsprechendes Ventil vorzusehen, um eine Temperatursteuerung bzw. -regelung bzgl. des Fluids zu ermöglichen.

Das so erwärmte Fluid wird zu dem Katalysator 40 geleitet. Im Katalysator 40 wird das Fluid dehydriert. Der gebundene Wasserstoff wird aus dem Trägermittel herausgelöst. Das unbeladene Trägermittel, vorzugsweise LOHC-, wird zu einem weiteren Speichertank 42 geleitet. Der Speichertank 42 weist einen Auslassstutzen auf, aus dem das unbeladene Trägermittel abgepumpt werden kann.

Der herausgelöste, gasförmige Wasserstoff wird von einem Verdichter 44 über eine Hochdruckleitung 46 in einen Druck- bzw. Puffertank 48 gefördert. Aus dem Puffertank 48 kann der gasförmige Wasserstoff zu den Verbrennungskammern des Motorblocks 12 der Brennkraftmaschine 10 zugeführt werden.

Der Puffertank 48 kann beispielsweise ein Volumen in einem Bereich zwischen 100 I und 200 I aufweisen. Der Puffertank 48 kann den gasförmigen Wasserstoff bei einem Druck von beispielsweise kleiner oder gleich 50 bar speichern. Der Puffertank 48 kann zweckmäßig so dimensioniert sein, dass bei einem Kaltstart der Brennkraftmaschine 10 immer genügend gasförmiger Wasserstoff zum Starten der Brennkraftmaschine vorliegt. Es ist auch möglich, dass der Puffertank 48 so dimensioniert ist, dass bei einer Spitzen- bzw. Maximallast der Brennkraftmaschine 10 zusätzlich erforderlicher Wasserstoff aus dem Puffertank 48 bereitgestellt werden kann. Dementsprechend kann der Puffertank 48 füllstandsüberwacht und/oder drucküberwacht sein, um sicherzustellen, dass eine vorbestimmte Mindestmenge von Wasserstoff für einen Kaltstart und/oder für eine Spitzenlast vorgehalten wird.

Es ist möglich, dass das Fluid vor dem Erreichen des Katalysators 40 oder im Katalysator 40 durch eine Heizeinrichtung 50 weiter erwärmt wird, zum Beispiel unter Kaltstartbedingungen der Brennkraftmaschine 10. Die Heizeinrichtung 50 kann beispielsweise eine elektrische Heizeinrichtung oder ein Brenner, der vorzugsweise Wasserstoff verbrennt, sein. Die Heizeinrichtung 50 kann beispielsweise stromabwärts des Wärmeübertragers 28 und stromaufwärts des Katalysators 40 angeordnet sein.

Es ist auch möglich, dass bspw. zusätzlich zu den Wärmeübertrager 28 und 38 der Wärmeübertrager 24 zum Erwärmen des Fluids genutzt wird. Beispielsweise kann der Wärmeübertrager 24 stromabwärts des Wärmeübertragers 38 und/oder stromaufwärts des Wärmeübertragers 28 bezüglich des Fluidstroms angeordnet sein.

Fachleute werden indes erkennen, dass die hierin beispielhaft offenbarte Vorrichtung 18 ein innovatives Verfahren zum Zuführen von Wasserstoff zu der Brennkraftmaschine 10 nutzt. Das Verfahren kann beispielsweise die Vorrichtung 18 oder zumindest einige Komponenten der Vorrichtung 18 verwenden. Das Verfahren kann das Speichern des Fluids (mit Wasserstoff beladenes, vorzugsweise flüssiges Trägermittel), zum Beispiel in dem Speichertank 34 aufweisen. Das Verfahren kann ferner das Erwärmen des Fluids, zum Beispiel in dem Wärmeübertrager 38, und das weitere Erwärmen des Fluids, zum Beispiel in dem Wärmeübertrager 28, aufweisen. Aus dem so erwärmten Fluid kann der Wasserstoff zum Beispiel zur Zuführung zu Verbrennungskammern der Brennkraftmaschine 10 herausgelöst werden, zum Beispiel mittels des Katalysators 40.

### Bezugszeichenliste

- 10: Brennkraftmaschine
- 12: Motorblock
- 14: Einlassluftsystem
- 16: Abgassystem
- 18: Vorrichtung zur Wasserstoffversorgung
- 20: Verdichter
- 22: Turbolader
- 24: Wärmeübertrager
- 26: Abgasturbine
- 28: Wärmeübertrager
- 30: Abgasbypassleitung
- 32: Ventil
- 34: Speichertank
- 36: Pumpe
- 38: Wärmeübertrager
- 39: Kühlmittelkreislauf
- 40: Katalysator
- 42: Speichertank
- 44: Verdichter
- 46: Druckleitung
- 48: Puffertank
- 50: Heizeinrichtung

## Patentansprüche

1. Vorrichtung (18) zur Versorgung einer Wasserstoff-Brennkraftmaschine (10) eines Kraftfahrzeugs, vorzugsweise eines Nutzfahrzeugs, mit Wasserstoff, aufweisend:
einen Speichertank (34) für ein Fluid, das ein mit Wasserstoff angereichertes Trägermittel, vorzugsweise LOHC, aufweist;
einen ersten Wärmeübertrager (38), der zum Empfangen des Fluids stromabwärts von dem Speichertank (34) angeordnet ist und zum Erwärmen des Fluids durch Wärmeübertragung von einem Kühlmittel, vorzugsweise Kühlwasser, der Wasserstoff-Brennkraftmaschine (10) ausgebildet ist;
einen zweiten Wärmeübertrager (28), der zum Empfangen des erwärmten Fluids stromabwärts von dem ersten Wärmeübertrager (38) angeordnet ist und zum weiteren Erwärmen des Fluids durch Wärmeübertragung von einem Abgasstrom der Wasserstoff-Brennkraftmaschine (10) ausgebildet ist; und
einen Katalysator (40), der zum Empfangen des weiter erwärmten Fluids stromabwärts von dem zweiten Wärmeübertrager (28) angeordnet und zum Herauslösen des Wasserstoffs aus dem Fluid ausgebildet ist.

2. Vorrichtung (18) nach Anspruch 1, ferner aufweisend:
eine Bypassleitung (30), vorzugsweise eine Abgasbypassleitung oder eine Fluidbypassleitung, die zum Umgehen des zweiten Wärmeübertragers (28) angeordnet ist.

3. Vorrichtung (18) nach Anspruch 2, ferner aufweisend:
ein Ventil (32), das zum Anpassen des Abgasstroms oder des Fluidstroms zu dem zweiten Wärmeübertrager (28) und/oder zu der Bypassleitung (30) angeordnet ist, wobei das Ventil (32) vorzugsweise derart gesteuert ist, dass eine Überhitzung des erwärmten Fluids im zweiten Wärmeübertrager (28) oberhalb von einer vorbestimmten Temperaturgrenze verhindert wird.

4. Vorrichtung (18) nach Anspruch 3, wobei:
das Ventil (32) an einem Abzweig der Bypassleitung (30) oder in der Bypassleitung (30) oder stromabwärts von einem Abzweig der Bypassleitung (30) und stromaufwärts von dem zweiten Wärmeübertrager (28) angeordnet ist; und/oder
das Ventil (32), vorzugsweise mittelbar oder unmittelbar, temperaturgesteuert bezüglich einer Temperatur des Fluids an einem Eingang und/oder an einem Ausgang des zweiten Wärmeübertragers (28) ist.

5. Vorrichtung (18) nach einem der vorherigen Ansprüche, wobei:
der erste Wärmeübertrager (38) dazu ausgebildet ist, das Fluid durch Wärmeübertragung von dem Kühlmittel auf ein Temperaturniveau größer oder gleich 90°C, vorzugsweise zwischen 90°C und 110°C, zu erwärmen; und/oder
der zweite Wärmeübertrager (28) dazu ausgebildet ist, das erwärmte Fluid durch Wärmeübertragung von dem Abgasstrom auf ein Temperaturniveau größer oder gleich 300°C, vorzugsweise zwischen 300°C und 360°C, und/oder auf ein zum Herauslösen des Wasserstoffs aus dem Fluid erforderliches Temperaturniveau zu erwärmen.

6. Vorrichtung (18) nach einem der vorherigen Ansprüche, wobei:
der erste Wärmeübertrager (38) als ein Platten-Wärmeübertrager ausgeführt ist; und/oder
der erste Wärmeübertrager (38) aus einem Aluminiumwerkstoff hergestellt ist oder besteht.

7. Vorrichtung (18) nach einem der vorherigen Ansprüche, ferner aufweisend:
einen Puffertank (48), der zum Speichern des herausgelösten Wasserstoffs stromabwärts des Katalysators (40) angeordnet ist.

8. Vorrichtung (18) nach Anspruch 7, wobei:
der Puffertank (48) als ein Drucktank ausgeführt ist, der den herausgelösten Wasserstoff unter Druck speichert, vorzugsweise mit einem Druck kleiner oder gleich 50 bar; und/oder
der Puffertank (48) ein Volumen kleiner oder gleich 200 l, vorzugsweise in einem Bereich zwischen 100 l und 200 l, aufweist.

9. Vorrichtung (18) nach Anspruch 7 oder Anspruch 8, wobei:
der Puffertank (48) füllstandsüberwacht und/oder drucküberwacht ist, vorzugsweise zum Einhalten einer Speicherung einer vorbestimmten Mindestmenge von Wasserstoff, der vorzugsweise für einen Kaltstart der Wasserstoff-Brennkraftmaschine (10) und/oder für eine Spitzenlast der Wasserstoff-Brennkraftmaschine (10) vorgehalten wird.

10. Vorrichtung (18) nach einem der vorherigen Ansprüche, ferner aufweisend:
eine Heizeinrichtung (50), vorzugsweise eine elektrische Heizeinrichtung oder einen Brenner, zum Erwärmen des Fluids, der vorzugsweise im oder stromaufwärts des Katalysators (40) angeordnet ist; und/oder
einen weiteren Wärmeübertrager (24), vorzugsweise stromabwärts des ersten Wärmeübertragers (38) und/oder stromaufwärts des zweiten Wärmeübertragers (28), wobei der weitere Wärmeübertrager (24) vorzugsweise zum Erwärmen des Fluids durch Wärmeübertragung von einem Ladeluftstrom der Wasserstoff-Brennkraftmaschine (10) ausgebildet ist.

11. Fahrzeug, vorzugsweise Kraftfahrzeug, bevorzugt Nutzfahrzeug, aufweisend:
eine Wasserstoff-Brennkraftmaschine (10); und
die Vorrichtung (18) nach einem der vorherigen Ansprüche.

12. Verfahren zum Versorgen einer Wasserstoff-Brennkraftmaschine (10) eines Kraftfahrzeugs, vorzugsweise eines Nutzfahrzeugs, mit Wasserstoff, vorzugsweise unter Verwendung der Vorrichtung (18) nach einem der Ansprüche 1 bis 10, aufweisend:
Speichern eines Fluids, das ein mit Wasserstoff angereichertes Trägermittel, vorzugsweise flüssiges LOHC, aufweist;
Erwärmen des Fluids durch Wärmeübertragung von einem Kühlmittel, vorzugsweise Kühlwasser, der Wasserstoff-Brennkraftmaschine (10);
weiteres Erwärmen des erwärmten Fluids durch Wärmeübertragung von einem Abgasstrom der Wasserstoff-Brennkraftmaschine (10);
Herauslösen des Wasserstoffs aus dem weiter erwärmten Fluid; und
Zuführen des herausgelösten Wasserstoffs zu der Wasserstoff-Brennkraftmaschine (10).

13. Verfahren nach Anspruch 12, wobei:
das Erwärmen des Fluids durch Wärmeübertragung von dem Kühlmittel das Fluid auf ein Temperaturniveau größer oder gleich 90°C erwärmt, vorzugsweise zwischen 90°C und 110°C; und/oder
das weitere Erwärmen des Fluids durch Wärmeübertragung von dem Abgasstrom das Fluid auf ein Temperaturniveau größer oder gleich 300°C erwärmt, vorzugsweise zwischen 300°C und 360°C, und/oder auf ein zum Herauslösen des Wasserstoffs aus dem Fluid erforderliches Temperaturniveau erwärmt.

14. Verfahren nach Anspruch 12 oder Anspruch 13, ferner aufweisend:
Anpassen einer Temperatur des Fluids, vorzugsweise Verhindern eines Überhitzens des Fluids oberhalb von einer vorbestimmten Temperaturgrenze, durch Anpassen einer für die Wärmeübertragung zur Verfügung stehenden Abgasstrommenge, vorzugsweise mittels einer gesteuerten, vorzugsweise ventilgesteuerten, Abgasbypassleitung (30); und/oder
Anpassen einer Temperatur des Fluids, vorzugsweise Verhindern eines Überhitzens des Fluids oberhalb von einer vorbestimmten Temperaturgrenze, durch Anpassen einer für die Wärmeübertragung zur Verfügung stehenden Fluidmenge, vorzugsweise mittels einer gesteuerten, vorzugsweise ventilgesteuerten, Fluidbypassleitung.

15. Verfahren nach einem der Ansprüche 12 bis 14, ferner aufweisend:
Vorhalten eines Puffervolumens von aus dem Fluid herausgelösten Wasserstoff stromaufwärts der Wasserstoff-Brennkraftmaschine (10) für einen Kaltstart der Wasserstoff-Brennkraftmaschine (10) und/oder für eine Spitzenlast der Brennkraftmaschine (10).

## Claims

1. A device (18) for supplying hydrogen to a hydrogen internal combustion engine (10) of a motor vehicle, preferably a commercial vehicle, comprising:
a storage tank (34) for a fluid comprising a hydrogen-enriched carrier means, preferably LOHC;
a first heat exchanger (38) arranged to receive the fluid downstream of the storage tank (34) and configured to heat the fluid by heat transfer from a coolant, preferably cooling water, of the hydrogen internal combustion engine (10);
a second heat exchanger (28) arranged to receive the heated fluid downstream of the first heat exchanger (38) and configured to further heat the fluid by heat transfer from an exhaust gas stream of the hydrogen internal combustion engine (10); and
a catalyst (40) arranged to receive the further heated fluid downstream of the second heat exchanger (28) and configured to extract hydrogen from the fluid.

2. The device (18) according to claim 1, further comprising:
a bypass line (30), preferably an exhaust bypass line or a fluid bypass line, arranged to bypass the second heat exchanger (28).

3. The device (18) according to claim 2, further comprising:
a valve (32) arranged to adjust the exhaust gas flow or the fluid flow to the second heat exchanger (28) and/or to the bypass line (30), wherein the valve (32) is preferably controlled such that an overheating of the heated fluid in the second heat exchanger (28) above a predetermined temperature limit is prevented.

4. The device (18) according to claim 3, wherein:
the valve (32) is arranged at a branch of the bypass line (30) or in the bypass line (30) or downstream of a branch of the bypass line (30) and upstream of the second heat exchanger (28); and/or
the valve (32) is, preferably indirectly or directly, temperature-controlled with respect to a temperature of the fluid at an inlet and/or at an outlet of the second heat exchanger (28).

5. The device (18) according to one of the preceding claims, wherein:
the first heat exchanger (38) is configured to heat the fluid by heat transfer from the coolant to a temperature level greater than or equal to 90°C, preferably between 90°C and 110°C; and/or
the second heat exchanger (28) is adapted to heat the heated fluid by heat transfer from the exhaust gas stream to a temperature level greater than or equal to 300°C, preferably between 300°C and 360°C, and/or to a temperature level necessary to extract the hydrogen from the fluid.

6. The device (18) according to one of the preceding claims, wherein:
the first heat exchanger (38) is designed as a plate heat exchanger; and/or
the first heat exchanger (38) is made or consists of an aluminum material.

7. The device (18) according to one of the preceding claims, further comprising:
a buffer tank (48) arranged downstream of the catalyst (40) for storing the extracted hydrogen.

8. The device (18) of claim 7, wherein:
the buffer tank (48) is designed as a pressure tank storing the extracted hydrogen under pressure, preferably with a pressure lower than or equal to 50 bar; and/or
the buffer tank (48) has a volume smaller than or equal to 200 l, preferably in a range between 100 l and 200 l.

9. The device (18) according to claim 7 or claim 8, wherein:
the buffer tank (48) is level monitored and/or pressure monitored, preferably for maintaining a storage of a predetermined minimum amount of hydrogen, which is preferably maintained for a cold start of the hydrogen internal combustion engine (10) and/or for a peak load of the hydrogen internal combustion engine (10).

10. The device (18) according to one of the preceding claims, further comprising:
a heating device (50), preferably an electric heating device or a burner, for heating the fluid, preferably arranged in or upstream of the catalyst (40); and/or
a further heat exchanger (24), preferably downstream of the first heat exchanger (38) and/or upstream of the second heat exchanger (28), wherein the further heat exchanger (24) is preferably configured for heating the fluid by heat transfer from a charge air flow of the hydrogen internal combustion engine (10).

11. A vehicle, preferably a motor vehicle, preferably a commercial vehicle, comprising:
a hydrogen internal combustion engine (10); and
the device (18) according to one of the preceding claims.

12. A method for supplying hydrogen to a hydrogen internal combustion engine (10) of a motor vehicle, preferably a commercial vehicle, preferably using the device (18) according to one of claims 1 to 10, comprising:
storing a fluid comprising a hydrogen-enriched carrier means, preferably liquid LOHC;
heating the fluid by heat transfer from a coolant, preferably cooling water, of the hydrogen internal combustion engine (10);
further heating the heated fluid by heat transfer from an exhaust gas stream of the hydrogen internal combustion engine (10);
etracting the hydrogen from the further heated fluid; and
supplying the extracted hydrogen to the hydrogen internal combustion engine (10).

13. The method of claim 12, wherein:
the heating of the fluid by heat transfer from the coolant heats the fluid to a temperature level greater than or equal to 90°C, preferably between 90°C and 110°C; and/or
the further heating of the fluid by heat transfer from the exhaust gas stream heats the fluid to a temperature level greater than or equal to 300°C, preferably between 300°C and 360°C, and/or to a temperature level required to extract the hydrogen out of the fluid.

14. The method according to claim 12 or claim 13, further comprising:
adjusting a temperature of the fluid, preferably preventing overheating of the fluid above a predetermined temperature limit, by adjusting an exhaust gas flow rate available for heat transfer, preferably by means of a controlled, preferably valve-controlled, exhaust gas bypass line (30); and/or
adjusting a temperature of the fluid, preferably preventing overheating of the fluid above a predetermined temperature limit, by adjusting a fluid quantity available for heat transfer, preferably by means of a controlled, preferably valve-controlled, fluid bypass line.

15. The method according to one of claims 12 to 14, further comprising:
maintaining a buffer volume of hydrogen extracted from the fluid upstream of the hydrogen internal combustion engine (10) for a cold start of the hydrogen internal combustion engine (10) and/or for a peak load of the internal combustion engine (10).

## Revendications

1. Dispositif (18) d'alimentation en hydrogène d'un moteur à combustion interne à hydrogène (10) d'un véhicule automobile, de préférence d'un véhicule utilitaire, ledit dispositif comprenant :
un réservoir de stockage (34) destiné à un fluide qui comporte un agent porteur enrichi en hydrogène, de préférence du LOHC ;
un premier échangeur de chaleur (38) qui est disposé en aval du réservoir de stockage (34) afin de recevoir le fluide et qui est conçu pour chauffer le fluide par transfert de chaleur depuis un agent de refroidissement, de préférence de l'eau de refroidissement, du moteur à combustion interne à hydrogène (10) ;
un deuxième échangeur de chaleur (28) qui est disposé en aval du premier échangeur de chaleur (38) afin de recevoir le fluide chauffé et qui est conçu pour chauffer davantage le fluide par transfert de chaleur depuis un flux de gaz d'échappement du moteur à combustion interne à hydrogène (10) ; et
un catalyseur (40) qui est disposé en aval du deuxième échangeur de chaleur (28) afin de recevoir le fluide davantage chauffé et qui est conçu pour extraire l'hydrogène du fluide par dissolution.

2. Dispositif (18) selon la revendication 1, comportant en outre :
une conduite de dérivation (30), de préférence une conduite de dérivation de gaz d'échappement ou une conduite de dérivation de fluide, qui est disposée de façon à contourner le deuxième échangeur de chaleur (28) .

3. Dispositif (18) selon la revendication 2, comportant en outre :
une soupape (32) qui est disposée de façon à adapter le flux de gaz d'échappement ou le flux de fluide au deuxième échangeur de chaleur (28) et/ou à la conduite de dérivation (30), la soupape (32) étant de préférence commandée de manière à empêcher la surchauffe du fluide chauffé dans le deuxième échangeur de chaleur (28) au-dessus d'une limite de température prédéterminée.

4. Dispositif (18) selon la revendication 3 :
la soupape (32) étant disposée au niveau d'un branchement de la conduite de dérivation (30) ou dans la conduite de dérivation (30) ou en aval d'un embranchement de la conduite de dérivation (30) et en amont du deuxième échangeur de chaleur (28) ; et/ou
la soupape (32) étant régulée en température, de préférence indirectement ou directement, par rapport à une température du fluide à une entrée et/ou à une sortie du deuxième échangeur de chaleur (28).

5. Dispositif (18) selon l'une des revendications précédentes :
le premier échangeur de chaleur (38) étant conçu pour chauffer le fluide par transfert de chaleur depuis l'agent de refroidissement jusqu'à un niveau de température supérieur ou égal à 90 °C, de préférence entre 90 °C et 110 °C ; et/ou
le deuxième échangeur thermique (28) étant conçu pour chauffer le fluide chauffé par transfert thermique depuis le flux de gaz d'échappement jusqu'à un niveau de température supérieur ou égal à 300 °C, de préférence entre 300 °C et 360 °C, et/ou jusqu'à un niveau de température requis pour extraire l'hydrogène du fluide par dissolution.

6. Dispositif (18) selon l'une des revendications précédentes :
le premier échangeur de chaleur (38) étant conçu comme un échangeur de chaleur à plaques ; et/ou
le premier échangeur de chaleur (38) étant en une matière d'aluminium ou étant réalisé à partir de celle-ci.

7. Dispositif (18) selon l'une des revendications précédentes, comportant en outre :
un réservoir tampon (48) qui est disposé en aval du catalyseur (40) afin de stocker l'hydrogène extrait par dissolution.

8. Dispositif (18) selon la revendication 7 :
le réservoir tampon (48) étant conçu comme un réservoir sous pression qui stocke sous pression l'hydrogène extrait par dissolution, de préférence à une pression inférieure ou égale à 50 bars ; et/ou
le réservoir tampon (48) ayant un volume inférieur ou égal à 200 1, de préférence dans une gamme comprise entre 100 1 et 200 1.

9. Dispositif (18) selon la revendication 7 ou la revendication 8 :
le réservoir tampon (48) étant surveillé en termes de niveau de remplissage et/ou de pression, de préférence pour maintenir le stockage d'une quantité minimale prédéterminée d'hydrogène, qui est de préférence mis en réserve en vue d'un démarrage à froid du moteur à combustion interne à hydrogène (10) et/ou d'une charge de pointe du moteur à combustion interne à hydrogène (10).

10. Dispositif (18) selon l'une des revendications précédentes, comportant en outre :
un module de chauffage (50), de préférence un module de chauffage électrique ou un brûleur destiné à chauffer le fluide et disposé de préférence dans le catalyseur (40) ou en amont de celui-ci ; et/ou
un autre échangeur de chaleur (24), de préférence en aval du premier échangeur de chaleur (38) et/ou en amont du deuxième échangeur de chaleur (28), l'autre échangeur de chaleur (24) étant conçu de préférence pour chauffer le fluide par transfert de chaleur depuis un flux air de suralimentation du moteur à combustion interne à hydrogène (10).

11. Véhicule, de préférence véhicule automobile, préférablement un véhicule utilitaire, comportant :
un moteur à combustion interne à hydrogène (10) ; et
le dispositif (18) selon l'une des revendications précédentes.

12. Procédé d'alimentation en hydrogène d'un moteur à combustion interne à hydrogène (10) d'un véhicule automobile, de préférence d'un véhicule utilitaire, de préférence à l'aide du dispositif (18) selon l'une des revendications 1 à 10, ledit procédé comprenant les étapes suivantes :
stocker un fluide qui comporte un agent porteur enrichi en hydrogène, de préférence du LOHC liquide ;
chauffer le fluide par transfert de chaleur depuis un agent de refroidissement, de préférence de l'eau de refroidissement, du moteur à combustion interne à hydrogène (10) ;
chauffer davantage le fluide chauffé par transfert de chaleur depuis un flux de gaz d'échappement du moteur à combustion interne à hydrogène (10) ;
extraire l'hydrogène du fluide davantage chauffé par dissolution ; et
amener l'hydrogène extrait par dissolution au moteur à combustion interne à hydrogène (10).

13. Procédé selon la revendication 12 :
le fait de chauffer le fluide par transfert de chaleur depuis l'agent de refroidissement chauffant le fluide à un niveau de température supérieur ou égal à 90 °C, de préférence entre 90 °C et 110 °C ; et/ou
le fait de chauffer davantage le fluide par transfert de chaleur depuis le flux de gaz d'échappement chauffant le fluide à un niveau de température supérieur ou égal à 300 °C, de préférence entre 300 °C et 360 °C, et/ou à un niveau de température requis pour extraire l'hydrogène du fluide par dissolution.

14. Procédé selon la revendication 12 ou la revendication 13, comprenant en outre les étapes suivantes :
adapter la température du fluide, de préférence empêcher une surchauffe du fluide au-dessus d'une limite de température prédéterminée, par adaptation d'une quantité de flux de gaz d'échappement disponible pour le transfert de chaleur, de préférence au moyen d'une conduite de dérivation de gaz d'échappement (30) commandée, de préférence commandée par soupape ; et/ou
adapter la température du fluide, de préférence empêcher la surchauffe du fluide au-dessus d'une limite de température prédéterminée, par adaptation d'une quantité de fluide disponible pour le transfert de chaleur, de préférence au moyen d'une conduite de dérivation de fluide commandée, de préférence commandée par une soupape.

15. Procédé selon l'une des revendications 12 à 14, comportant en outre l'étape suivante :
maintenir un volume tampon d'hydrogène, extrait du fluide par dissolution, en amont du moteur à combustion interne à hydrogène (10) en vue d'un démarrage à froid du moteur à combustion interne à hydrogène (10) et/ou en vue d'une charge de pointe du moteur à combustion interne (10).
